# EUROPEAN PATENT APPLICATION

(11) **EP 4 586 579 A1**
(43) Date of publication of application: **16.07.2025**
(21) Application number: 24151328.2
(22) Date of filing: 11.01.2024
(51) Int. Cl.: H04L 45/00

(54) **DEVICE, SYSTEM AND METHOD FOR DETERMINING COMMUNICATION PATHS USING ENERGYRELATED METRICS**

(71) Applicant: NTT DOCOMO, INC., Tokyo 100-6150 (JP)
(72) Inventor: BAKHSHI, Bahador, 80687 Munich (DE); SAMA, Malla Reddy, 80687 Munich (DE); GUERZONI, Riccardo, 80687 Munich (DE); TANAKA, Itsuma, 80687 Munich (DE); MINOKUCHI, Atsushi, Tokyo, 100-6150 (JP)
(74) Representative: Viering, Jentschura & Partner mbB Patent- und Rechtsanwälte

(57) **Abstract**

According to various embodiments, a device is described comprising one or more processors configured to determine Packet Data Unit, PDU, session information about an active PDU session comprising a User Plane, UP, communication path including a plurality of active Network Functions, NFs, determine one or more alternative UP communication paths using energy-related metrics, wherein each NF of a plurality of NFs has a respective assigned energy-related metric, and generate a message comprising the determined one or more alternative UP communication paths.

## Description

The present disclosure relates to devices, systems and methods to determine alternative User Plane, UP, communication paths using energy-related metrics in a 5G communication network.

Due especially to global warming and climate change, it is nowadays becoming more and more important to consider and improve the energy efficiency and "energy-awareness" of radio communication networks. It is therefore currently of growing importance that network operators are able to implement new energy-related policies for 5G (Fifth Generation) communication networks, aiming to meet certain energy-related requirements, such as for example minimizing energy consumption, maximizing energy efficiency, maximizing green energy usage and/or ensuring that the total carbon emission is within a predefined range.

In order to improve the energy-awareness in the 5GC, it is in particular desirable to improve the User Plane, UP, traffic routing.

In the UP, it is further desirable to improve and optimize the traffic routing between User Plane Functions, UPFs, connected via the N9 interface as specified by 3GPP (Third Generation Partnership Project).

Therefore, in order to improve energy-awareness in the 5GC, approaches are desirable to improve UP traffic routing.

According to various embodiments, a device is provided including one or more processors configured to determine Packet Data Unit, PDU, session information about an active PDU session including a User Plane, UP, communication path including a plurality of active Network Functions, NFs, determine one or more alternative UP communication paths using energy-related metrics, wherein each NF of a plurality of NFs has a respective assigned energy-related metric, and generate a message including the determined one or more alternative UP communication paths.

According to various embodiments, a method for determining one or more alternative User Plane, UP, communication paths is provided, wherein the method includes determining Packet Data Unit, PDU, session information about an active PDU session including a UP communication path including a plurality of active Network Functions, NFs, determining one or more alternative UP communication paths using energy-related metrics, wherein each NF of a plurality of NFs has a respective assigned energy-related metric, and generating a message including the determined one or more alternative UP communication paths.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
**FIG. 1** shows an exemplary radio communication system 100 configured according to 5G (Fifth Generation) as specified by 3GPP (Third Generation Partnership Project).
**FIG. 2** illustrates exemplary User Plane Functions, UPFs.
**FIG. 3** shows an exemplary system 300 to receive energy-related information.
**FIG. 4** shows a flow diagram 400 illustrating a procedure to reconfigure UP paths according to some aspects.
**FIG. 5** shows a flow diagram 500 illustrating a procedure to reconfigure UP paths after a request from a User Equipment, UE, according to some aspects.
**FIG. 6** shows a device 600 according to some aspects.
**FIG. 7** shows a flow diagram 700 illustrating a method for determining one or more alternative UP communication paths according to some aspects.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

The word "exemplary" is used herein to mean "serving as an example, instance, or illustration". Any embodiment or design described herein as "exemplary" is not necessarily to be construed as preferred or advantageous over other embodiments or designs.

The terms "at least one" and "one or more" may be understood to include a numerical quantity greater than or equal to one (e.g., one, two, three, four, [...], etc.). The term "a plurality" may be understood to include a numerical quantity greater than or equal to two (e.g., two, three, four, five, [...], etc.).

The words "plural", "plurality" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. The phrases "group (of)", "set (of)", "collection (of)", "series (of)", "sequence (of)", "grouping (of)", etc., and the like in the description and in the claims, if any, refer to a quantity equal to or greater than one, i.e., one or more. The phrases "proper subset", "adjust subset", and "lesser subset" refer to a subset of a set that is not equal to the set, illustratively, referring to a subset of a set that contains less elements than the set.

The phrase "at least one of' with regard to a group of elements may be used herein to mean at least one element from the group including the elements. For example, the phrase "at least one of' with regard to a group of elements may be used herein to mean a selection of: one of the listed elements, a plurality of one of the listed elements, a plurality of individual listed elements, or a plurality of a multiple of individual listed elements.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, e.g., any kind of analog or digital circuit, and may also be referred to as a "processing circuit," "processing circuitry," among others. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality, among others, and conversely that any single processor, controller, or logic circuit detailed herein may be realized as two (or more) separate entities with equivalent functionality, among others.

Unless explicitly specified, the term "transmit" encompasses both direct (point-to-point) and indirect transmission (via one or more intermediary points). Similarly, the term "receive" encompasses both direct and indirect reception. Furthermore, the terms "transmit", "receive", "communicate", and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e. unidirectional or bidirectional communication in one or both of the incoming and outgoing directions.

The term "calculate" encompass both 'direct' calculations via a mathematical expression/formula/relationship and 'indirect' calculations via lookup or hash tables and other array indexing or searching operations. The term "determine" encompass both 'direct' determinations via a mathematical expression/formula/relationship and 'indirect' determinations via lookup or hash tables and other array indexing or searching operations.

Various examples corresponding to aspects of this disclosure are described below:
Example 1 is a device including one or more processors, the one or more processors are configured to determine Packet Data Unit, PDU, session information about an active PDU session comprising a User Plane, UP, communication path including a plurality of active Network Functions, NFs, determine one or more alternative UP communication paths using energy-related metrics, wherein each NF of a plurality of NFs has a respective assigned energy-related metric, and generate a message comprising the determined one or more alternative UP communication paths.

In Example 2, the subject-matter of Example 1 may optionally include that the device further includes a transmitter configured to transmit the message to a Session Management Function, SMF.

In Example 3, the subject-matter of any one of Examples 1 or 2 may optionally include that the device further includes a transmitter configured to transmit the message to a Policy Control Function, PCF.

In Example 4, the subject-matter of any one of Examples 1 to 3 may optionally include that the plurality of NFs comprises a plurality of User Plane Functions, UPFs.

In Example 5, the subject-matter of any one of Examples 1 to 4 may optionally include that the energy-related metrics include at least one metric from a group consisting of energy consumption metric, energy efficiency metric, carbon emission metric, and green energy usage (consumption) metric.

In Example 6, the subject-matter of any one of Examples 1 to 5 may optionally include that the one or more alternative UP paths are determined to have at least one of the energy-related metrics at a minimum.

In Example 7, the subject-matter of any one of Examples 1 to 5 may optionally include that the one or more alternative UP paths are determined to have at least one of the energy-related metrics at a maximum.

In Example 8, the subject-matter of any one of Examples 1 to 5 may optionally include that the one or more alternative UP paths are determined to have at least one of the energy-related metrics within a predefined range.

In Example 9, the subject-matter of any one of Examples 1 to 5 may optionally include that the one or more alternative UP paths are determined to have one or more of the energy-related metrics at a minimum, at a maximum and/or within a predefined range.

In Example 10, the subject-matter of any one of Examples 1 to 9 may optionally include that the message includes a set of traffic steering policies, wherein each traffic steering policy includes at least one alternative UP communication path, and wherein said at least one alternative UP communication path includes a chain of NFs and a unique identifier.

In Example 11, the subject-matter of any one of Examples 1 to 10 may optionally include that the device further includes a receiver configured to receive energy-related information, wherein the energy related metrics are based on the (received) energy-related information.

In Example 12, the subject-matter of Example 11 may optionally include that the receiver is configured to receive energy-related information from an Operations, Administration, and Management, OAM, system and/or from a Network Repository Function, NRF.

In Example 13, the subject-matter of any one of Examples 11 or 12 may optionally include that the receiver is configured to receive energy-related information from a network analytics function.

In Example 14, the subject-matter of any one of Examples 11 to 13 may optionally include that the energy-related information includes information about network operator policies on energy and energy consumption (and/or includes further energy-related network operator policies).

In Example 15, the subject-matter of any one of Examples 1 to 14 may optionally include that the one or more processors are further configured to determine the one or more alternative UP communication paths using energy-related metrics in response to a trigger event.

In Example 16, the subject-matter of Example 15 may further include that the trigger event is (at least) one of a PDU session establishment request from a radio communication terminal device, a request from a network operator, the expiration of a periodic timer, a change in network operator energy policy, a change in the energy-related metrics, and a change in the traffic load of one or more NF out of the plurality of NFs.

In Example 17, the subject-matter of any one of Examples 1 to 16 may optionally include that the one or more processors are configured to operate in a 5G radio communication network.

Example 18 is a system including a device according to the subject-matter of any one of Examples 1 to 17, and including a Session Management Function, SMF (implemented e.g. by a (SMF) processor, a (SMF) structure and/or an (SMF) entity) configured to receive the message from the device, determine an alternative UP communication path from the one or more alternative UP communication paths, and reconfigure the PDU session in accordance with the determined alternative UP communication path.

In Example 19, the subject-matter of Example 18 may optionally include that the message received by the SMF includes a set of traffic steering policies, wherein each traffic steering policy includes at least one alternative UP communication path, and wherein said alternative UP communication path includes a chain of NFs and a unique identifier.

In Example 20, the subject-matter of any one of Examples 18 or 19 may optionally include that the plurality of NFs comprises a plurality of User Plane Functions, UPFs, and that the message received by the SMF includes a set of N9 traffic steering policies, which are traffic steering policies for (steering/controlling) the traffic between UPFs.

In Example 21, the subject-matter of any one of Examples 18 to 20 may optionally include a Policy Control Function, PCF, (implemented e.g. by a (PCF) processor, a (PCF) structure and/or an (PCF) entity) configured to receive a further message from the device, wherein the further message includes information about (energy-related) traffic steering policies and identifies the traffic influenced by these (energy-related) traffic steering policies, update Policy and Charging Control, PCC, rules to include the received (energy-related) traffic steering policies, and send a message to the SMF with the updated PCC rules, wherein the SMF is further configured to reconfigure the PDU session in accordance with the determined one or more alternative UP communication paths and with the updated PCC rules.

In Example 22, the subject-matter of any one of Example 21 may optionally include that the plurality of NFs comprises a plurality of User Plane Functions, UPFs, and that the traffic steering policies received by the PCF are N9 traffic steering policies, which are traffic steering policies for traffic between UPFs.

In Example 23, the subject-matter of any one Examples 18 to 22 may optionally include that the device is included in an Operations, Administration, and Management, OAM, system.

In Example 24, the subject-matter of Example 23 may optionally include that the OAM system receives energy-related information from power suppliers.

In Example 25, the subject-matter of any one Examples 18 to 22 may optionally include that the device is included (part of) in the SMF.

In Example 26, the subject-matter of any one of Example 18 to 25 may optionally include that the system is a 5G communication system.

Example 27 is a method for determining one or more alternative User Plane, UP, communication paths, wherein the method includes determining Packet Data Unit, PDU, session information about an active PDU session comprising a UP communication path including a plurality of active Network Functions, NFs, determining one or more alternative UP communication paths using energy-related metrics, wherein each NF of a plurality of NFs has a respective assigned energy-related metric, and generating a message comprising the determined one or more alternative UP communication paths.

In Example 28, the subject-matter of Example 27 may optionally include transmitting the message to a Session Management Function, SMF.

In Example 29, the subject-matter of any one of Examples 27 or 28 may optionally include transmitting the message to a Policy Control Function, PCF.

In Example 30, the subject-matter of any one of Examples 27 to 29 may optionally include that the plurality of NFs comprises a plurality of User Plane Functions, UPFs.

In Example 31, the subject-matter of any one of Examples 27 to 30 may optionally include that the energy-related metrics include at least one metric from a group consisting of energy consumption metric, energy efficiency metric, carbon emission metric, and green energy usage (consumption) metric.

In Example 32, the subject-matter of any one of Examples 27 to 31 may optionally include that the one or more alternative UP paths are determined to have at least one of the energy-related metrics at a minimum.

In Example 33, the subject-matter of any one of Examples 27 to 31 may optionally include that the one or more alternative UP paths are determined to have at least one of the energy-related metrics at a maximum.

In Example 34, the subject-matter of any one of Examples 27 to 31 may optionally include that the one or more alternative UP paths are determined to have at least one of the energy-related metrics within a predefined range.

In Example 35, the subject-matter of any one of Examples 27 to 31 may optionally include that the one or more alternative UP paths are determined to have one or more of the energy-related metrics at a minimum, at a maximum and/or within a predefined range.

In Example 36, the subject-matter of any one of Examples 27 to 35 may optionally include that the message includes a set of traffic steering policies, wherein each traffic steering policy includes at least one alternative UP communication path, and wherein said at least one alternative UP communication path includes a chain of NFs and a unique identifier.

In Example 37, the subject-matter of any one of Examples 27 to 36 may optionally include receiving energy-related information, wherein the energy related metrics are based on the (received) energy-related information.

In Example 38, the subject-matter of Example 37 may optionally include receiving energy-related information from an Operations, Administration, and Management, OAM, system and/or from a Network Repository Function, NRF.

In Example 39, the subject-matter of any one of Examples 37 or 38 may optionally include receiving energy-related information from a network analytics function.

In Example 40, the subject-matter of any one of Examples 37 to 39 may optionally include that the energy-related information includes information about network operator policies on energy and energy consumption (and/or includes further energy-related network operator policies).

In Example 41, the subject-matter of any one of Examples 27 to 40 may optionally include determining the one or more alternative UP communication paths using energy-related metrics in response to a trigger event.

In Example 42, the subject-matter of Example 41 may further include that the trigger event is (at least) one of a PDU session establishment request from a radio communication terminal device, a request from a network operator, the expiration of a periodic timer, a change in network operator energy policy, a change in the energy-related metrics, and a change in the traffic load of one or more NF out of the plurality of NFs.

In Example 43, the subject-matter of any one of Examples 27 to 42 may optionally include that the method is for determining one or more alternative User Plane, UP, communication paths in a 5G communication network.

It should be noted that one or more of the features of any of the Examples above may be combined with any one of the other examples. In particular, the Examples described in the context of the device are analogously valid for the method and vice versa.

According to further embodiments, a computer program and a computer readable medium comprising instructions, which, when executed by a computer, make the computer perform the method of any one of the above Examples 27 to 43 are provided.

In the following, various examples will be described in more detail.

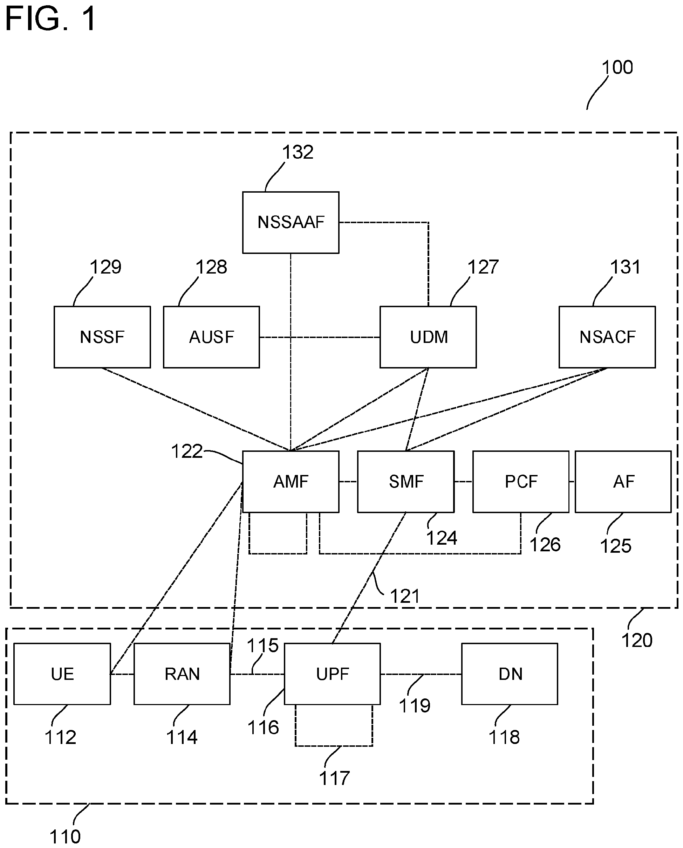

**FIG. 1** shows an exemplary (mobile) radio communication system 100 configured according to 5G (Fifth Generation) as specified by 3GPP (Third Generation Partnership Project), i.e. a 5G radio communication system.

In the following, the radio communication system 100 and the radio access network, RAN, are assumed to be configured in accordance with 5G radio access technology (5G New Radio). It should be noted that other radio communication systems and other radio acess networks, having similar functionalities to 5G, may be used.

The exemplary radio communication system 100 includes a User Plane, UP, 110 and a Control Plane, CP, 120.

The UP 110 includes a mobile radio terminal device 112 such as a UE (User Equipment), a Nano Equipment (NE), and the like. The mobile radio terminal device 112 forms the terminal side of the exemplary radio communication system 100 described in the following.

Furthermore, the UP 110 includes a radio access network, RAN, 114, which may include a plurality of radio access network nodes, i.e. base stations configured to provide radio access in accordance with a 5G radio access technology (5G New Radio). Each radio access network node may provide a radio communication with the mobile radio terminal device 112 over an air interface. It should be noted that the radio access network 114 may include any number of radio access network nodes.

The UP 110 further includes a plurality of User Plane Functions, UPFs, 116, wherein the UPFs are connected to the RAN 114 via an interface 115, corresponding to the N3 interface (reference point) as specified by 3GPP (Third Generation Partnership Project). The (chain of) UPFs 116 are connected between them via an interface 117, corresponding to the N9 interface (reference point) as specified by 3GPP.

The UP 110 further includes a Data Network, DN, 118 (e.g. internet access). The UPFs 116 are connected to the DN 118 via an interface 119. Interface 119 corresponds to the N6 interface (reference point) as specified by 3GPP.

The control plane 120 of exemplary radio communication system 100 includes an Access and Mobility Management Function, AMF, 122. The AMF 122 is connected to the mobile radio terminal device 112 and to the RAN 114.

The control plane 120 further includes a Session Management Function, SMF, 124 connected to the UPFs 116 via interface 121, which corresponds to the N4 interface (reference point) as specified by 3GPP.

The control plane 120 further includes a Policy Control Function, PCF 126 which provides policy rules for control plane functions. The PCF is connected the SMF via interface 123, which corresponds to the N7 interface (reference point) as specified by 3GPP.

The control plane 120 further includes an AF 125 (Application Function), a UDM 127 (Unified Data Management), an AUSF 128 (Authentication Server Function), an NSSF 129 (Network Slice Selection Function), a NSACF 131 (Network Slice-Specific Access Control Function), and a NSSAAF 132 (Network Slice Specific Authentication and Authorization Function), which may all be configured as specified by 3GPP for 5G radio communication networks and systems.

Further network functions not shown in FIG. 1, such as e.g. the NWDAF (Network Data Analytics Function) or the NRF (Network Repository Function) may also be part of the control plane 120.

The core network (5GC) (not shown in FIG. 1) may be defined by the control plane 120 together with the UPFs 116 and the DN 118 in the user plane 110. The RAN 114 together with the core network forms the network side of the exemplary radio communication system 100.

The exemplary radio communication system 100 may further include an OAM (Operation, Administration and Maintenance) system (not shown in FIG. 1), e.g. implemented by one or more OAM servers, which is connected to the RAN 114 and to the core network.

In the following, the (data) traffic in the UPFs 116 connected via interface 117 in the exemplary radio communication system 100, corresponding to the N9 interface (reference point) as specified by 3GPP will be discussed in further details.

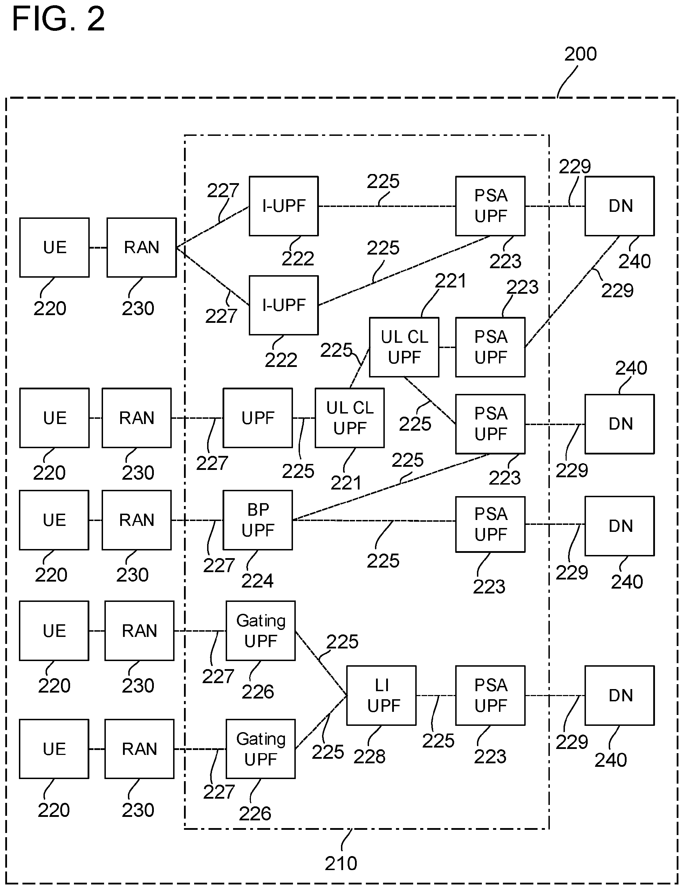

**FIG. 2** illustrates exemplary User Plane Functions, UPFs, 210 in the User Plane, UP, 200.

The user plane 200 of FIG. 2 includes a plurality of UEs 220, a plurality of RANs 230, a plurality of UPFs 210 and a plurality of DNs 240.

The plurality of UPFs 210 includes two intermediate UPFs 222 (I-UPFs), a Branching Point (BP) UPF 224 for multi home UEs, two gating UPFs 226 for UPF service chaining connected to a Lawful Intercept (LI) UPF 228.

The plurality of UPFs 210 further includes two Uplink Classifier (UL CL) UPFs 221 for traffic steering, and five PDU Session Anchor (PSA) UPFs 223.

All of the UPFs from the plurality of UPFs 210 are connected between each other via interface 225, which corresponds to the N9 interface (reference point) as specified by 3GPP.

The plurality of UPFs 210 are connected to the plurality of RANs 230 via a plurality of interfaces 227, each corresponding to a N3 interface (reference point) as specified by 3GPP, and are connected to the DNs 240 via a plurality of interfaces 229, each corresponding to a N6 interface (reference point) as specified by 3GPP.

Additionally, the plurality of UPFs 210 is also connected to an SMF in the control plane via an N4 interface/reference point (not shown in FIG. 2).

In the example illustrated by FIG. 2, the different UPFs may have different energy requirements, consumption and efficiency. In particular, some of the UPFs may be power supplied by fossil-based energy, while other UPFs may be power supplied by green/renewable energy.

For example, the I-UPFs 222 may have a high-power consumption, the BP UPF 224 and the Gating UPFs 226 may be power supplied by green/renewable energy, one of the UL CL UPF 221 and two out of the five the PSA UPFs 223 may be extremely power efficient, the LI UPF may be power supplied by fossil-based energy, and two other PSA UPFs may be power supplied by fossil-based energy.

In the following, the implementation of energy-related (energy-based) policies in a 5G communication network, such as e.g. minimizing energy consumption, maximizing energy efficiency, minimizing carbon emission and/or maximizing green energy usage will be described in details.

Currently, networks (operators) do not receive enough precise energy-related information, such as e.g. information about the type of energy the different NFs are supplied with, or information about future changes (e.g. in one hour, at night, etc.) in the power mix of power suppliers.

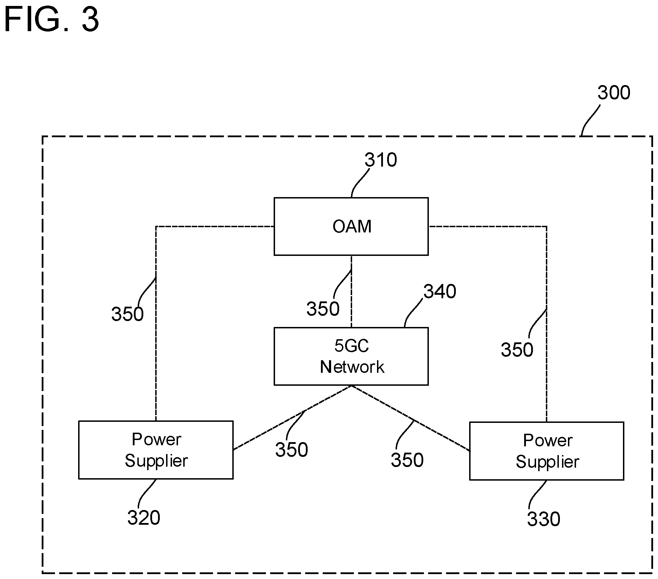

**FIG. 3** illustrate an exemplary system 300 to receive energy-related information.

In the exemplary system 300 of FIG. 3, an OAM system 310 is configured to receive energy-related information 350 either directly from different power suppliers 320, 330, and/or from a 5G core network 340, e.g. by being subscribed to a NF in the 5G core network 340 (e.g. by being subscribed to a network analytics function such as the NWDAF).

In the example of FIG. 3, power supplier 320 may for example use (mainly) renewable energy, while power supplier 330 may use (mainly) fossil-based energy to supply NFs such as e.g. UPFs. Both power suppliers 320 and 330 may further also transmit energy-related information 350 to the 5G core network 340, indicating e.g. the amount and type of energy used to supply the NFs.

It should be noted that future 3GPP Releases are expected to include more energy-related information/metrics about NFs, and in particular about UPFs (energy-related information and metrics are included in 3GPP Release 19).

In the following, it is assumed that the OAM and/or the network operator is able to provide/receive an estimation of the energy consumption and energy efficiency for each NF.

It is further assumed that the OAM and/or the network operator is able to provide/receive an estimation of the ratio of renewable energy supplied to each site, and is able to provide/receive an estimation of the carbon emission of the power consumed per site.

This can for example be implemented via contracts and/or SLAs (Service Level Agreements) between the OAMs/network operators and the power suppliers. This information combined with the energy consumption and energy efficiency of each NF enables to estimate the ratio of renewable energy consumption and the carbon emission for each NF.

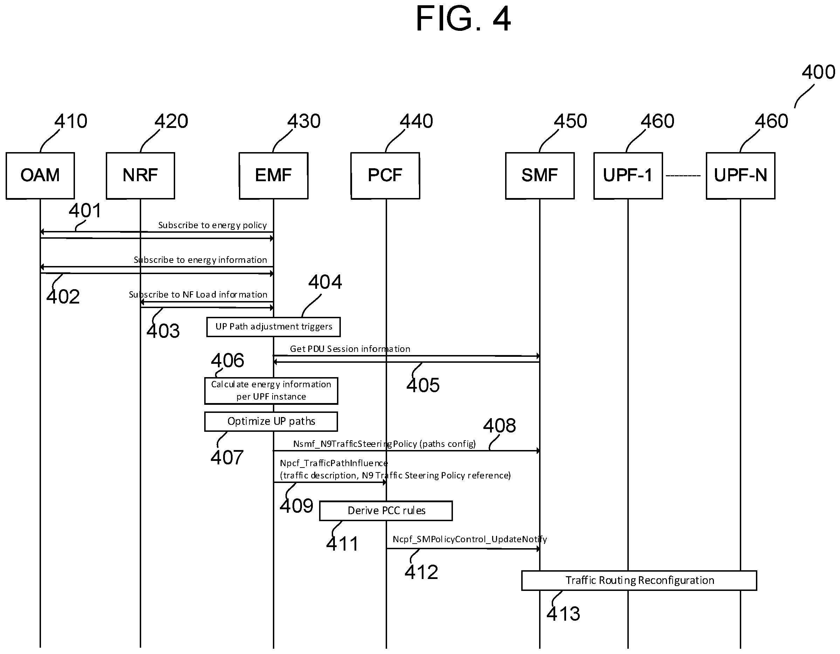

**FIG. 4** shows a flow diagram 400 illustrating a procedure to reconfigure UP paths according to some aspects.

The flow diagram 400 includes an OAM 410, a NRF 420, a new network function, the Energy Manager (or Management) Function, EMF, 430, a PCF 440, a SMF 450 and a plurality of UPFs 460 (UPF-1, ..., UPF-N).

It should be noted that the above functions may all be implemented by an entity, a structure, a processor, a controller or the like.

In 401, the EMF 430 subscribes to the OAM 410 to get the network operator policy on energy and energy consumption, such as e.g. policies on energy efficiency, renewable energy ratios and carbon emission.

In 402, the EMF 430 subscribes to the OAM 410 to get energy-related information and metrics, such as e.g. the energy consumption per NF, the energy efficiency per NF, the renewable energy ratio per site and the carbon emission per site.

In 403, the EMF 430 subscribes to the NRF 420 to get information about the traffic load of network functions. This information may be used in 406 and 407 when computing energy efficiency and optimizing the UP paths.

In 404, a trigger event 470 triggers the EMF 430 to start the procedure of adjusting the UP paths and notifying the SMF 450 and PCF 440.

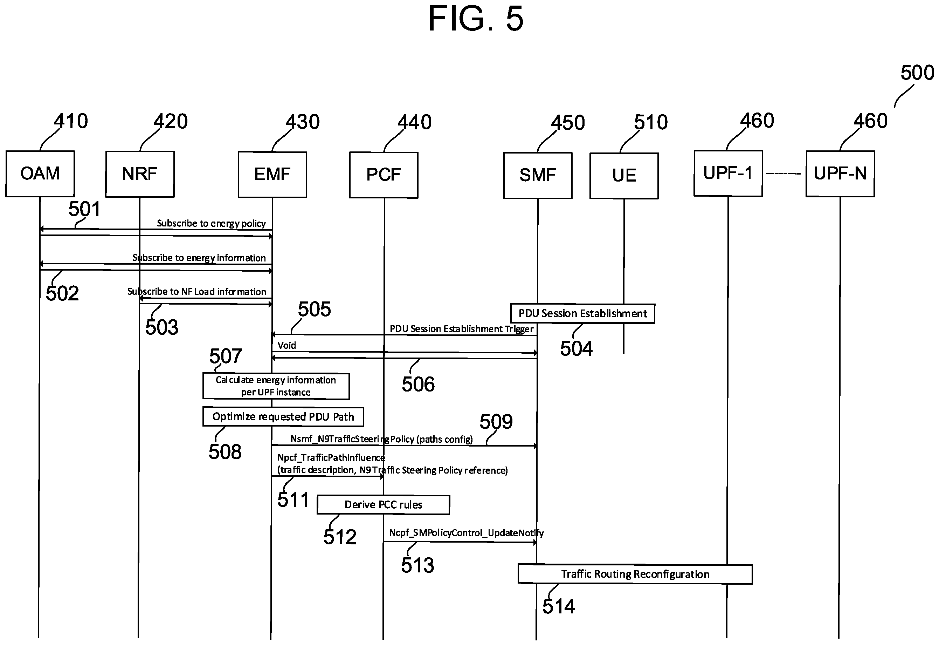

The trigger event may for example be the expiration of a periodic timer, the establishment request of a new PDU session (see FIG. 5), changes in the subscription 401 of the EMF 430 to the OAM 410, i.e. changes to operator energy policy, changes in the subscription 402 of the EMF 430 to the OAM 410, i.e. changes in the energy-related information and metrics, and/or changes in the subscription 403 of the EMF 430 to the NRF 420, i.e. changes in the traffic load of the network functions.

Further trigger events may for example be a UP wide change event, if the EMF 430 is subscribed to the event, or changes in the supplier energy-mix or energy policies.

Furthermore, to save energy and/or optimize other energy-related metrics, the OAM 410 may trigger UP path readjustment network-wide or for parts of the network. The OAM 410 may also trigger UP path readjustment because it has determined that some UPFs should be switched off and/or traffic moved away from certain UPFs.

In 405, in reaction to trigger event 470, the EMF 430 gets information about (active) PDU sessions from the SMF 450, the information indicating for each PDU session which UPFs are serving the respective PDU session. With this information the EMF 430 is able to construct the path (chain of UPFs) for the (active) PDU sessions.

In 406, the EMF 430 uses the information received from the OAM 410 in 401 and 402, the information received from the NRF 420 in 403, and the information received from the SMF 450 in 405 to calculate (determine) energy-related information/metric per UPF (instance), such as e.g. energy efficiency, energy consumption, ratio (or amount) of green/renewable energy, and/or carbon emission per UPF (instance).

In 407, the EMF 430, determines (calculates/optimizes) the UP paths of one or more PDU sessions, e.g. for a subset of PDU sessions. The calculation of the EMF 430 is based on the operator policies received in 401, which determine the (relative) importance of different aspects of energy, and on the energy-related information of the UPFs calculated in 406. The EMF 430 is thus configured to determine the UP path/chain of UPFs for a set of PDU sessions.

The optimization of the UP paths may be performed by known optimization algorithms and techniques, machine learning/artificial intelligence approaches, etc.

In 408, after having generated the chain of UPFs/ UP path in 407, the EMF 430 generates, per/for each updated UP path, a notification including a set of N9 Traffic Steering policies (the N9 interface as specified by 3GPP connects two UPFs between each other), wherein each traffic policy contains at least a chain of UPFs and a unique ID. As can be seen in FIG. 4, the EMF 430 configures the Traffic Steering Policies in the SMF 450 by sending a new notification "*Nsmf_N9 TrafficSteeringPolicy*"*.*

In 409, the EMF 410 asks (requests) the PCF 440 to update the set of Policy and Charging Control, PCC, rules based on the policies configured in 408. As can be seen in FIG. 4, the EMF 430 sends a new request notification "*Npcf_TrafficPathInfluence*" to the PCF 440. In this request, the EMF 430 specifies at least a one of the N9 Traffic Steering policies configured in the SMF in 408 and a traffic description defining the target traffic influenced by the request, i.e., a subset of PDU sessions.

In 411, based on the information received from EMF 430 in 408, the PCF 440 derives/updates the PCC rules to instruct SMF 450 for (re)configuration of UP paths. The PCF 440 considers the at least one in 408 specified N9 Traffic Steering policy, operator's policies and service requirements when updating the PCC rules. The PCC rules are extended to include a N9 Traffic Steering Policy Identifier.

In 412, the PCF 440 sends the new/updated policies to SMF 450 using the existing notification/service operation "*Npcf_SMPolicyControl_UpdateNotify*".

In 413, the SMF 450 implements the determined (optimized) UP path by instructing the UPFs using the existing notifications/service operations.

When the PCC rules are activated or updated with N9 Traffic Steering, the SMF 450 sets the Forwarding Policy within the Forwarding Action Rule(s), FAR(s), based on the N9 Traffic Steering Policy IDs in the PCC rule. The SMF derives N4 rules which instruct the UPF to pass the traffic through the relevant N9 tunnels among UPFs.

Alternatively to FIG. 4, the EMF 430, instead of being a stand-alone NF can be collocated in the OAM 410, the SMF 450, or in an analytics network function such as the NWDAF.

In a further alternative embodiment to FIG. 4, the EMF can subscribe to "energy-related" analytics by the NWDAF (which are expected to be developed in 3GPP Release 19), to take into account the future status of the network.

Furthermore, the EMF 430 may only update a subset of the PDU sessions, e.g. a subset of PDU sessions that were determined by the operator, high-bandwidth-PDU sessions, long-life PDU sessions, PDU sessions in specific geographical areas and/or containing specific UPFs.

Alternatively to FIG. 4, the EMF 430 may also indicate directly to the SMF 450 (some of) the UP path changes without passing through the PCF 440.

**FIG. 5** shows a flow diagram 500 illustrating a procedure to reconfigure UP paths after a request from a User Equipment, UE, according to some aspects.

The flow diagram 500 includes OAM 410, NRF 420, EMF, 430, PCF 440, SMF 450, a plurality of UPFs 460 and User Equipment, UE 510.

Similarly to the flow diagram 400 of FIG. 4, in 501, 502 and 503, the EMF 430 receives energy-related information, network energy policies and NF load information from the OAM 410 and the NRF 420.

In the flow diagram 500 of FIG. 5, the trigger event 504 for the EMF 430 is the UE 510 requesting a new PDU session to be established to the SMF 450.

In 505, the SMF 450 notifies the EMF 430 that UE 510 is requesting the establishment of a new PDU session, and requests that the EMF 430 configures the PDU path for the to be established new PDU session.

Therefore, in 506, the EMF 430 does not need for EMF 430 to request any PDU session information from the SMF 450, i.e. 506 is void.

Similarly to the flow diagram 400 of FIG. 4, in 507 the EMF 430 calculates the energy information per UPF (instance), and optimizes in 508 the newly requested PDU path.

Similarly to the flow diagram 400 of FIG. 4, in 509, EMF 430 generates a new notification "*Nsmf_N9 TrafficSteeringPolicy*" including a set of N9 Traffic Steering policies, wherein each traffic policy contains at least a chain of UPFs and a unique ID, and send it to the SMF 450.

Similarly to the flow diagram 400 of FIG. 4, in 511, EMF 430 generates a new notification "*Npcf_TrafficPathInfluence*" including at least a one of the N9 Traffic Steering policies configured in the SMF in 509 and a traffic description defining the target traffic influenced by the request, and send it to the PCF 440.

Similarly to the flow diagram 400 of FIG. 4, in 512, the PCF 440, based on the information received from EMF 430 in 511, updates/derives the PCC rules.

Similarly to the flow diagram 400 of FIG. 4, in 513, the PCF 440 sends the updated policies to the SMF 450 using the existing notification *"Npcf_SMPolicyControl_UpdateNotify*".

In 514, the SMF 450 implements the UP path/chain of UPFs determined by the EMF 430 for the new PDU session (and notifies UE 510 with the PDU session information (not shown in FIG. 5)).

As an alternative to the flow diagram 500 of FIG. 5, an Application Function, AF, may make a Service Function Chaining, SFC, request to the PCF 440. In response, the PCF 440 may trigger the EMF 430 to optimize the SFC. In this case, the EMF 430 first needs to get PDU session information from the SMF 450.

Furthermore, the described energy-aware UP path adjustment/optimization can be extended to include a RAN controller and/or a DN/Transport Network Software-Defined Networking, SDN, controller. For example, the RAN controller and/or the Transport Network SDN controller can be initially coordinated with the NF load information received from a NRF, and after the EMF has determined the UP path/chain of UPFs for the designated PDU sessions, the joint 5GC UP path and RAN and/or Transport routing can be optimized.

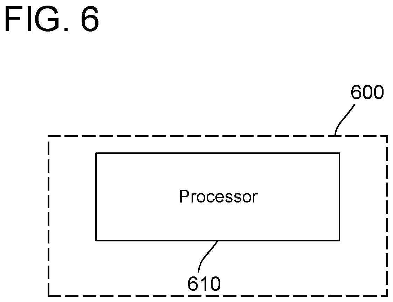

According to various aspects and embodiments, a device is provided as illustrated in FIG. 6.

**FIG. 6** shows a device 600 according to some aspects.

The device 600 includes one or more processors 610 configured to determine PDU session information about an active PDU session comprising a UP communication path including a plurality of active Network Functions, NFs. Device 600 then determines one or more alternative UP communication paths using energy-related metrics, wherein each NF of a plurality of NFs has a respective assigned energy-related metrics, and generates a message comprising the determined one or more alternative UP communication paths.

The Energy Manager Function, EMF, 430 illustrated in the flow diagram of FIG. 4 and FIG. 5 may for example be implemented as device 600 and/or include device 600.

In summary, according to various embodiments and aspects, a device is provided which, after receiving PDU session information, is configured to determine (optimize) the UP path/chain of UPFs of the PDUs taking into account (optimizing) one or more energy-related metrics. After the determination of the UP paths, the device is configured to send a message/notification to the SMF and/or to the PCF, notifying about the new UP path and/or new energy-related traffic steering policies.

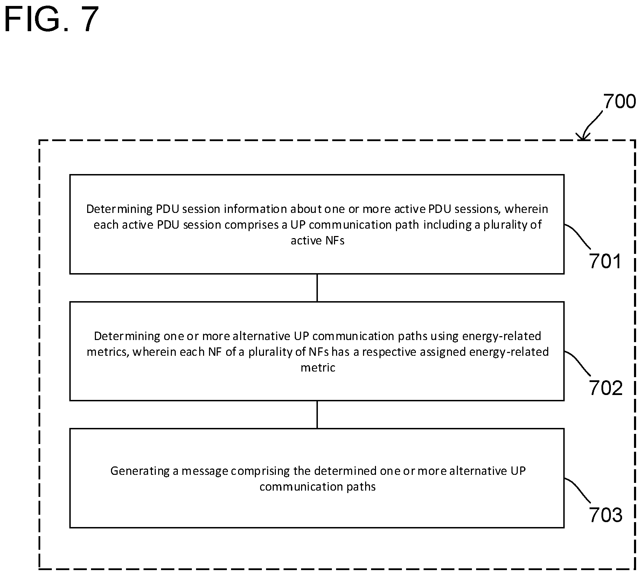

According to various aspects and embodiments, a method is provided as illustrated in FIG. 7.

**FIG. 7** shows a flow diagram 700 illustrating a method for determining one or more alternative UP communication paths according to some aspects.

In 701, Packet Data Unit, PDU, session information about one or more active PDU sessions is determined, wherein each active PDU session comprises a UP communication path including a plurality of active Network Functions, NFs.

In 702, one or more alternative UP communication paths using energy-related metrics are determined, wherein each NF of a plurality of NFs has a respective assigned energy-related metric.

In 703, a message comprising the determined one or more alternative UP communication paths is generated.

According to various embodiments and aspects, in other words, an "energy-aware" (energy efficient) UP path/chain of UPFs is determined and communicated to an SMF and/or PCF. This allows to save energy and/or use more renewable energy in the user plane of a 5GC. By taking into account existing network operator policies and different aspects of the network operator policies (energy consumption, energy efficiency, etc.), network operators are enabled to use the above described method and device and to update their policies accordingly.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A device, comprising one or more processors configured to:
determine Packet Data Unit, PDU, session information about an active PDU session comprising a User Plane, UP, communication path including a plurality of active Network Functions, NFs;
determine one or more alternative UP communication paths using energy-related metrics, wherein each NF of a plurality of NFs has a respective assigned energy-related metric; and
generate a message comprising the determined one or more alternative UP communication paths.

2. The device of claim 1, further comprising:
a transmitter configured to transmit the message to a Session Management Function, SMF.

3. The device of any one of claims 1 or 2, wherein the plurality of NFs comprises a plurality of User Plane Functions, UPFs.

4. The device of any one of claims 1 to 3, wherein the energy-related metrics comprise at least one metric from a group consisting of:
energy consumption metric;
energy efficiency metric;
carbon emission metric; and
green energy usage metric.

5. The device of any one of claims 1 to 4,
wherein the message comprises a set of traffic steering policies, and
wherein each traffic steering policy comprises at least one alternative UP communication path, wherein said at least one alternative UP communication path includes a chain of NFs and a unique identifier.

6. The device of any one of claims 1 to 5, further comprising:
a receiver configured to receive energy-related information, wherein the energy-related metrics are based on the energy-related information.

7. The device of any one of claims 1 to 6, wherein the one or more processors are further configured to:
determine the one or more alternative UP communication paths using energy-related metrics in response to a trigger event.

8. The device of claim 7, wherein the trigger event is at least one of:
a PDU session establishment request from a radio communication terminal device;
a request from a network operator;
expiration of a periodic timer;
a change in network operator energy policy;
a change in the energy-related metrics; and
a change in the traffic load of one or more NF out of the plurality of NFs.

9. A system, comprising:
a device according to any one of claims 1 to 8; and
a Session Management Function, SMF, configured to:
receive the message from the device;
determine an alternative UP communication path from the one or more alternative UP communication paths; and
reconfigure the PDU session in accordance with the determined alternative UP communication path.

10. The system of claim 9,
wherein the message received by the SMF comprises a set of traffic steering policies, and
wherein each traffic steering policy comprises at least one alternative UP communication path, wherein said alternative UP communication path includes a chain of NFs and a unique identifier.

11. The system of any one claims 9 or 10,
wherein the plurality of NFs comprises a plurality of User Plane Functions, UPFs; and
wherein the message received by the SMF comprises a set of N9 traffic steering policies, which are traffic steering policies for the traffic between UPFs.

12. The system of any one of claims 9 to 11, further comprising:
a Policy Control Function, PCF, configured to:
receive a further message from the device, wherein the further message comprises information about traffic steering policies and identifies the traffic influenced by these traffic steering policies;
update Policy and Charging Control, PCC, rules to include the received traffic steering policies; and
send a message to the SMF with the updated PCC rules;
wherein the SMF is further configured to reconfigure the PDU session in accordance with the determined one or more alternative UP communication paths and with the updated PCC rules.

13. The system of claim 12,
wherein the plurality of NFs comprises a plurality of User Plane Functions, UPFs; and
wherein the traffic steering policies received by the PCF are N9 traffic steering policies, which are traffic steering policies for traffic between UPFs.

14. A method for determining one or more alternative User Plane, UP, communication paths, the method comprising:
determining Packet Data Unit, PDU, session information about one or more active PDU sessions, wherein each active PDU session comprises a UP communication path including a plurality of active Network Functions, NFs;
determining one or more alternative UP communication paths using energy-related metrics, wherein each NF of a plurality of NFs has a respective assigned energy-related metric; and
generating a message comprising the determined one or more alternative UP communication paths.

15. The method of claim 14, further comprising:
transmitting the message to a Session Management Function, SMF.
